# EUROPÄISCHE PATENTSCHRIFT

(11) **EP 2 129 558 B1**
(45) Veröffentlichungstag und Bekanntmachung des Hinweises auf die Patenterteilung: **30.09.2015**
(21) Anmeldenummer: 08707577.6
(22) Anmeldetag: 06.02.2008
(51) Int. Cl.: B60T 7/12

(54) **VERFAHREN UND VORRICHTUNG ZUR GESCHWINDIGKEITSREGELUNG BEI GEFÄLLEFAHRT**
METHOD AND DEVICE FOR SPEED REGULATION WHEN TRAVELLING ON AN INCLINE
PROCÉDÉ ET DISPOSITIF DE RÉGULATION DE VITESSE EN CAS DE CONDUITE SUR PENTE

(30) Priorität: 28.02.2007 DE 102007009860
(43) Veröffentlichungstag der Anmeldung: 09.12.2009
(73) Patentinhaber: Lucas Automotive GmbH, 56070 Koblenz (DE)
(72) Erfinder: BACH, Thomas, 56332 Wolken (DE); BLESER, Michael, 56637 Plaidt (DE); HOFFMANN, Elmar, 56584 Meinborn (DE); WÖLL, Stefan, 56357 Weyer (DE); THELEN, Harald, 56332 Oberfell (DE)
(74) Vertreter: Röthinger, Rainer
(86) Internationale Anmeldenummer: PCT/EP2008/000912
(87) Internationale Veröffentlichungsnummer: WO 2008/104268

(56) Entgegenhaltungen:
- DE-A1- 19 954 807
- DE-C1- 10 006 780
- US-A1- 2005 096 183

## Beschreibung

### Gebiet der Erfindung

Die Erfindung betrifft ein Verfahren und eine Vorrichtung zur Geschwindigkeitsregelung. Genauer gesagt betrifft die Erfindung die Geschwindigkeitsregelung eines Kraftfahrzeugs bei Befahren einer Gefällestrecke.

### Hintergrund der Erfindung

Kraftfahrzeuge, die Gefällestrecken bewältigen, müssen je nach einzuhaltender Geschwindigkeit und Stärke des Gefälles während der Talfahrt abgebremst werden. In gewissen Grenzen ist es meist möglich, durch Wählen einer geeigneten Getriebestufe das Bremsmoment des Antriebsmotors auszunutzen, um die Fahrzeuggeschwindigkeit bei Talfahrt zu verringern.

Durch einen im Schiebebetrieb arbeitenden Antriebsmotor kann bei Talfahrt die Geschwindigkeit jedoch nur ungenau und in geringem Maße variiert werden. Um die Talfahrtgeschwindigkeit beispielsweise geringfügig zu erhöhen, kann der Fahrer ein wenig Gas geben und den Motor im Teillastbetrieb fahren. Dies bringt jedoch einen unnötigen Brennstoffverbrauch sowie eine vermeidbare akustische Umweltbelastung durch den Motor mit sich. Auch für den Verschleiß des Motors ist es nicht optimal, längere Gefällestrecken im Teillastbetrieb zu bewältigen. Soll umgekehrt die Talfahrtgeschwindigkeit geringfügig verringert werden, so wird der Fahrer hierfür die Betriebsbremse betätigen.

Längere Talfahrten mit betätigter Betriebsbremse sind beispielsweise üblich bei Geländefahrzeugen, die steile Abhänge hinunterfahren. Ändert sich die Steilheit der Fahrtstrecke, so ist der Fahrer gefordert, seine Bremsbetätigung entsprechend nachzuführen.

Es finden bereits Einrichtungen Verwendung, welche auf einer Gefällestrecke durch ein automatisches Betätigen der Bremsen das Fahrzeug auf einer konstanten, vom Fahrer voreingestellten Geschwindigkeit halten. Derartige Regeleinrichtungen, die eine Fahrzeugbetriebsbremse so beeinfilussen, dass eine Talfahrt mit konstanter Geschwindigkeit ermöglicht wird, sind unter der Bezeichnung HDC (Hill Descent Control) bekannt. HDC-Regeleinrichtungen machen häufig Gebrauch von Komponenten, die im Rahmen von beispielsweise Antiblockiersystemen (ABS) oder Antriebsschlupfregelungen (ASR) bereits serienmäßig im Kraftfahrzeug verbaut sind. Zu solchen Komponenten zählen Steuerungsgeräte, Raddrehzahlsensoren, elektrisch angetriebene Pumpen und Kupplungen, Magnetregelventile, diverse Sensoren sowie weitere Aggregate und Einrichtungen.

Bei manchen HDC-Regeleinrichtungen wird lediglich die Differenz zwischen einer Soll-Geschwindigkeit und einer Ist-Geschwindigkeit bestimmt, woraus dann eine eventuell erforderliche Bremsbetätigung abgeleitet wird. Andere HDC-Regeleinrichtungen bestimmen einen Wert für die Fahrbahnneigung und ermitteln aus diesem ein Betätigungssignal für die Betriebsbremse. Aus der WO 01/14185 A1 ist es beispielsweise bekannt, den Einfluss des Fahrbahngefälles in Fahrtrichtung auf die Fahrzeuggeschwindigkeit unabhängig von einer "herkömmlichen" Geschwindigkeitsregelung zu kompensieren, indem der von der Geschwindigkeitsregelung ermittelte Bremsdruck um einen Kompensationsbremsdruck erhöht wird, dessen Betrag aus der Fahrbahnneigung bestimmt wird. Die Betriebsbremse wird dann mit der Summe dieser beiden Bremsdruckanteile beaufschlagt. Weitere Techniken zur Bestimmung eines Bremsdrucks unter Berücksichtigung einer Fahrbahnneigung sind aus der US 2005/096183 A1 bekannt.

Es hat sich jedoch gezeigt, dass derartige Systeme nicht gut mit Strecken veränderlicher Steigung zurecht kommen. Dies zeigt sich beispielsweise in Regelschwingungen, unvermittelt starken Einflussnahmen auf die Betriebsbremse oder einer ungleichmäßigen Fahrzeuggeschwindigkeit im Übergang zwischen Abschnitten unterschiedlicher Steigung. Gelegentlich wird auch beobachtet, dass die durch bekannte HDC-Regelungen tatsächlich erreichte Fahrzeuggeschwindigkeit nicht vollständig unabhängig vom Grad des Gefälles ist.

Der Erfindung liegt daher die Aufgabe zugrunde, das Regelverhalten und die Betriebssicherheit der genannten Geschwindigkeitsregelung für Kraftfahrzeuge zu verbessern.

### Kurzer Abriss der Erfindung

Gemäß Anspruch 1 umfasst ein erfindungsgemäßes Verfahren zur Regelung einer Ist-Geschwindigkeit eines Kraftfahrzeugs in dessen Fahrtrichtung (bei Vorwärtsfahrt oder bei Rückwärtsfahrt) bei Befahren einer Gefällestrecke das Bestimmen eines Ist-Geschwindigkeitssignals, das Bestimmen eines Inklinationssignals, das Bestimmen eines Soll-Geschwindigkeitssignals, das Bestimmen eines Differenzsignals aus dem Ist-Geschwindigkeitssignal und dem Soll-Geschwindigkeitssignal, das Bestimmen eines Stellsignals aus dem Differenzsignal, wobei das Bestimmen des Stellsignals aus dem Differenzsignal durch das Inklinationssignal beeinflusst wird, das Umwandeln des Stellsignals in wenigstens ein Bremssignal und das Bereitstellen des wenigstens einen Bremssignals an eine Bremsanlage des Kraftfahrzeugs, wobei das Inklinationssignal eine zeitliche Inklinationsänderung angibt.

Das Bestimmen des Stellsignals aus dem Differenzsignal kann eine Proportional-Integral-Differential (PID)-Regelung umfassen. Derartige Regelungen sind im Stand der Technik wohlbekannt und verfügen über drei parallele Zweige, deren Eingänge jeweils mit einem Differenzsignal einer Regelstrecke beaufschlagt werden, während ihre Ausgänge additiv kombiniert werden. In ihrer allgemeinen, von der Erfindung mit umfassten Form beinhaltet eine PID-Regelung auch all diejenigen Variationen, die durch Weglassen eines oder zweier Zweige entstehen (PI, PD, P, I, D). Die Beeinflussung des Regelverhaltens durch das Inklinationssignal kann insbesondere den integrativen Zweig (I) der PID-Regelung betreffen.

Die Umwandlung des Stellsignals in ein Bremssignal kann eine Umwandlung einer aus dem Stellsignal abgeleiteten Soll-Bremskraft in einen der Soll-Bremskraft zugeordneten Bremsdruck umfassen. Hierbei kann eine Abschätzung des Verhältnisses der beiden Größen Bremskraft und Bremsdruck erfolgen. Eine solche Abschätzung ist insbesondere dann zweckmäßig, wenn der Zusammenhang zwischen Soll-Bremskraft und Bremsdruck nicht genau oder nicht genau genug modelliert werden kann.

Verfügt das Kraftfahrzeug über mehrere Radbremsen, so kann das Stellsignal in wenigstens ein radindividuelles Bremssignal umgewandelt werden. Eine solche Aufteilung der Bremssignale auf die verschiedenen Radbremsen kann Bremskraftverteilungsmechanismen unterliegen, die eine ungleichmäßige Verteilung der Bremskraft bzw. des Bremsdrucks erlauben. Wird das Stellsignal in zwei oder mehr radindividuelle Bremssignale umgewandelt, so kann die Summe der radindividuellen Bremsdrücke gemäß der radindividuellen Bremssignale gleich dem mittels des Stellsignals angeforderten Gesamtbremsdruck sein.

Die Umwandlung des Stellsignals in wenigstens ein Bremssignal kann weitere Einflüsse, die den Zusammenhang zwischen der Soll-Bremskraft und einer Verzögerung des Kraftfahrzeugs beeinflussen, berücksichtigen. Insbesondere kann die radindividuelle Bremssignalverteilung Funktionen eines Antiblockiersystems (ABS) und/oder eines Elektronischen Stabilitätsprogramms (ESP) umfassen.

Gemäß einem zweiten Aspekt umfasst die Erfindung ein Computerprogrammprodukt mit Programmcodemitteln zur Durchführung eines erfindungsgemäßen Verfahrens, wenn das Computerprogrammprodukt auf einer Verarbeitungseinheit läuft. Dabei kann das Computerprogrammprodukt auf einem für die Verarbeitungseinheit lesbaren Medium gespeichert sein. Bei der Verarbeitungseinheit kann es sich um eine Steuereinheit handeln. Die Steuereinheit kann an ein Bussystem des Fahrzeugs angeschlossen sein.

Gemäß Anspruch 10 umfasst eine erfindungsgemäße Vorrichtung zur Regelung einer Ist-Geschwindigkeit eines Kraftfahrzeugs in dessen Fahrtrichtung bei Befahren einer Gefällestrecke eine Einrichtung zur Bestimmung eines Ist-Geschwindigkeitssignals, eine Einrichtung zur Bestimmung eines Inklinationssignals, eine Einrichtung zur Bestimmung eines Soll-Geschwindigkeitssignals, eine Einrichtung zur Bestimmung eines Differenzsignals aus dem Ist-Geschwindigkeitssignal und dem Soll-Geschwindigkeitssignal, eine Einrichtung zur Bestimmung eines Stellsignals aus dem Differenzsignal und eine Einrichtung zur Bestimmung wenigstens eines Bremskraftsignals aus dem Stellsignal, wobei die Einrichtung zur Bestimmung des Inklinationssignals mit der Einrichtung zur Bestimmung des Stellsignals derart gekoppelt ist, dass das Bestimmen des Stellsignals aus dem Differenzsignal durch das Inklinationssignal beeinflussbar ist. Dabei gibt das Inklinationssignal eine zeitliche Inklinationsänderung an.

Gemäß einem weiteren Aspekt umfasst ein System zum Abbremsen eines mehrere Räder umfassenden Kraftfahrzeugs, insbesondere bei Befahren einer Gefällestrecke, eine mit dem Kraftfahrzeug koppelbare und auf wenigstens eines seiner Räder wirkende Bremsanlage sowie eine erfindungsgemäße Geschwindigkeitsregelvorrichtung.

### Kurze Beschreibung der Zeichnungen

- Fig. 1: zeigt ein Ausführungsbeispiel einer erfindungsgemäßen Vorrichtung zur Regelung der Ist-Geschwindigkeit eines Kraftfahrzeugs bei Befahren einer Gefällestrecke;
- Fig. 2: zeigt im Ablaufdiagramm ein Ausführungsbeispiel eines erfindungsgemäßen Verfahrens zur Regelung der Ist-Geschwindigkeit eines Kraftfahrzeugs;
- Fig. 3: zeigt ein weiteres Ausführungsbeispiel einer erfindungsgemäßen Vorrichtung zur Regelung der Ist-Geschwindigkeit eines Kraftfahrzeugs; und
- Fig. 4: zeigt eine beispielhafte Gefällestrecke und verschiedene Parameteränderungen, die bei Befahren der Strecke mit einem erfindungsgemäß geschwindigkeitsgeregelten Kraftfahrzeugs auftreten.

### Beschreibung eines bevorzugten Ausführungsbeispiels

In dieser Beschreibung ist mit Inklination jeweils diejenige Neigung eines Kraftfahrzeugs gemeint, welche eine Beschleunigung bzw. Verzögerung des Kraftfahrzeugs in seine Bewegungsrichtung verursacht. Die Inklination bezeichnet also die Steigung oder das Gefälle in Fahrtrichtung. Dementsprechend sind alle Geschwindigkeiten eines Kraftfahrzeugs jeweils in dessen Bewegungsrichtung zu verstehen. In jedem Fall ist die Bremsanlage dazu ausgelegt, eine Beschleunigung entgegen der Bewegungsrichtung des Fahrzeugs auszuüben.

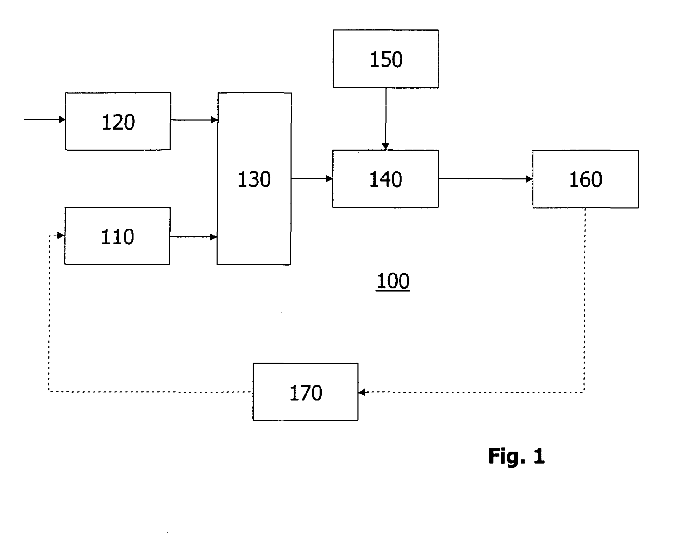

Fig. 1 zeigt ein Ausführungsbeispiel einer erfindungsgemäßen Vorrichtung 100 zur Geschwindigkeitsregelung eines Kraftfahrzeugs bei Befahren einer Gefällestrecke.

Eine Einrichtung 110 zur Bestimmung eines Ist-Geschwindigkeitssignals stellt ein aus der tatsächlichen Geschwindigkeit des Fahrzeugs abgeleitetes Signal bereit. Hierbei kann es sich um ein analoges oder digitales Signal handeln, welches vorzugsweise einen linearen Zusammenhang zur Fahrzeuggeschwindigkeit aufweist. Eine übliche Signalform ist ein digitales Tachosignal.

Eine Einrichtung 120 zur Bestimmung eines Soll-Geschwindigkeitssignals stellt ebenfalls ein eine Geschwindigkeit repräsentierendes Signal an ihrem Ausgang bereit. Das Festlegen der Soll-Geschwindigkeit mittels der Einrichtung 120 erfolgt vorzugsweise durch den Fahrer des Kraftfahrzeugs, indem dieser ein Bedienelement (nicht dargestellt) der Einrichtung 120 verwendet, um die gegenwärtig gefahrene Geschwindigkeit als Soll-Geschwindigkeit zu übernehmen oder eine eingestellte Soll-Geschwindigkeit zu erhöhen oder zu verringern.

Die Geschwindigkeitsregelvorrichtung 100 umfasst ferner eine Einrichtung 130 zur Bestimmung eines Differenzsignals aus dem Ist-Geschwindigkeitssignal und dem Soll-Geschwindigkeitssignal. Die Übertragung der entsprechenden Geschwindigkeitssignale der Einrichtungen 110 und 120 an die Einrichtung 130 zur Bestimmung eines Differenzsignals kann in einer beliebigen, dem Signal angepassten Technologie erfolgen. Beispielsweise kann bei Vorliegen digitaler Signale ein CAN-Bus verwendet werden. Es können jedoch auch beliebige andere Signalübertragungsprotokolle verwendet werden. Eine analoge Übertragung, etwa mittels klassischer Kupferleitungen, ist ebenfalls möglich. Dies gilt sinngemäß für alle Signalübertragungen der dargestellten Ausführungsbeispiele.

Die Einrichtung 130 zur Bestimmung des Differenzsignals bildet die Differenz aus der bestimmten Ist-Geschwindigkeit und der bestimmten Soll-Geschwindigkeit. Eine positive Differenz weist also daraufhin, dass das Fahrzeug abgebremst werden muss, um die Soll-Geschwindigkeit zu erreichen, während eine negative Differenz besagt, dass das Fahrzeug bereits langsamer als die Soll-Geschwindigkeit ist (und ggf. fahrerunabhängig beschleunigt werden muss).

Das von der Einrichtung 130 bestimmte Differenzsignal wird in eine Regeleinrichtung 140 zur Bestimmung eines Stellsignals weitergeleitet. Die Einrichtung 140 stellt die eigentliche Regelungsfunktion dieses Ausführungsbeispiels bereit. Prinzipiell kann es sich bei der Einrichtung 140 um jeden beliebigen Typ von Regler handeln, beispielsweise einen linearen Regler, wie einen PID-Regler, oder einen nichtlinearen Regler wie beispielsweise einen adaptiven Regler oder einen nichtstetigen Regler. Vorzugsweise erfolgt die Regelung mittels Verarbeitung digitaler Signale. Eventuell müssen hierfür die bestimmten Eingangssignale zuerst von analogem in digitales Format umgewandelt werden. Es ist jedoch auch möglich, einen analogen Rechner oder mechanische Komponenten für die Regelung zu verwenden.

Eine Einrichtung 150 zur Bestimmung der Inklination bestimmt ein Signal, welches in einem bekannten Zusammenhang zum Neigungswinkel und vorzugsweise zur Änderung des Neigungswinkels des Fahrzeugs steht. Die Darstellung und Übertragung dieses Signals erfolgt entsprechend der oben beschriebenen Darstellung und Übertragung der Signale der Komponenten 110 und 120. Das Inklinationssignal wirkt auf die Regeleinrichtung 140 ein und versetzt diese in die Lage, die Inklinationsinformation in die Geschwindigkeitsregelung des Kraftfahrzeugs miteinzubeziehen.

Die Regeleinrichtung 140 bestimmt aus dem Differenzsignal und dem Inklinationssignal ein Stellsignal, welches geeignet ist, eine Fahrzeugverzögerung so zu beeinflussen, dass die Ist-Geschwindigkeit der Soll-Geschwindigkeit möglichst gut entspricht. Das Stellsignal wird dann einer Umwandlungseinrichtung 160 zur Verfügung gestellt, welche aus dem Stellsignal ein oder mehrere Bremssignale bestimmt, die eine tatsächliche Betätigung einer oder mehrerer Bremsen eines Kraftfahrzeuges 170 steuern. Das Fahrzeug 170 umfasst eine Bremsanlage (nicht dargestellt), die auf mehrere Räder (nicht dargestellt) des Fahrzeugs wirkt. Der Einfluss des Bremssignals der Umwandlungseinrichtung 160 auf das Fahrzeug 170 besteht also in einem Aktivieren der Bremsen und damit in einer Verzögerung des Fahrzeugs 170. Die veränderte Geschwindigkeit des Fahrzeugs 170 findet Einfluss auf die von der Einrichtung 110 bestimmte Ist-Geschwindigkeit.

Auf diese Weise ist der Regelkreis geschlossen, und die Regelung kann kontinuierlich durchgeführt werden. Eine Einrichtung zur Aktivierung bzw. Deaktivierung der Geschwindigkeitsregelung kann zusätzlich implementiert werden, ist in diesem Ausführungsbeispiel aber nicht dargestellt. Eine Deaktivierung der Regelung könnte an verschiedenen Komponenten durchgeführt werden, beispielsweise durch Deaktivieren der Regelung 140 oder durch Beeinflussung der Umwandlungseinrichtung 160.

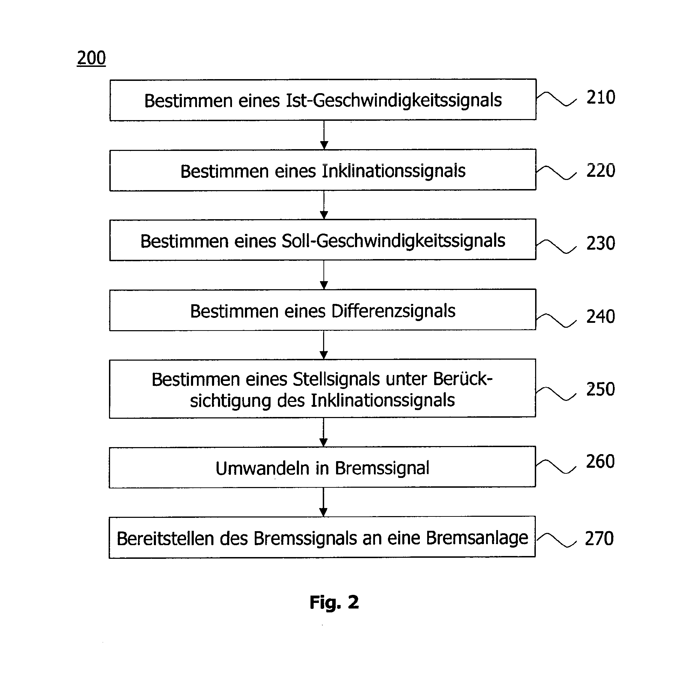

Im Folgenden wird unter Bezugnahme auf Fig. 2 ein Flussdiagramm 200 erläutert, das ein Ausführungsbeispiel eines erfindungsgemäßen Regelungsverfahrens veranschaulicht. Die einzelnen Verfahrensschritte können von einer Regelungsvorrichtung 100 wie in Fig. 1 veranschaulicht oder einer anderweitig konfigurierten Regelungsvorrichtung durchgeführt werden. Das Verfahren kann sowohl bei Vorwärtsfahrt als auch bei Rückwärtsfahrt eines Kraftfahrzeugs Verwendung finden.

Zu Beginn des Verfahrens wird in Schritt 210 ein Ist-Geschwindigkeitssignal bestimmt, welches die momentane Bewegungsgeschwindigkeit des Kraftfahrzeugs repräsentiert. Im darauf folgenden Schritt 220 wird ein Inklinationssignal bestimmt, welches die Neigung des Kraftfahrzeugs in die Fahrtrichtung repräsentiert. Anschließend wird in Schritt 230 ein Soll-Geschwindigkeitssignal bestimmt. Dieses Signal repräsentiert die Geschwindigkeit, welche das Kraftfahrzeug erreichen soll. Die Reihenfolge der Schritte 210, 220 und 230 ist hierbei willkürlich gewählt. Insbesondere die Schritte 210 und 230 können in beliebiger Reihenfolge und auch parallel abgearbeitet werden; es müssen nur beide Signale gültig sein, bevor Schritt 240 ausgeführt wird. Schritt 220 muss ein gültiges Signal liefern, bevor es in Schritt 250 verarbeitet werden kann (siehe unten).

In Schritt 240 wird aus dem Ist-Geschwindigkeitssignal aus Schritt 210 und dem Soll-Geschwindigkeitssignal aus Schritt 230 ein Differenzsignal gebildet. Damit das Differenzsignal positiv ist, wenn das Fahrzeug eine größere Ist-Geschwindigkeit aufweist als seine Soll-Geschwindigkeit, wird in Schritt 240 vom Ist-Geschwindigkeitssignal aus Schritt 210 das Soll-Geschwindigkeitssignal aus Schritt 230 abgezogen. Es ist möglich, bei der Differenzbildung Minuend und Subtrahend zu vertauschen, mit dem Ergebnis, dass das resultierende Differenzsignal ein anders Vorzeichen erhält. Die folgenden Schritte müssten dies dann entsprechenden berücksichtigen.

In Schritt 250 wird aus dem Differenzsignal und dem Inklinationssignal (Schritte 220 und 240) ein Stellsignal bestimmt. Das Stellsignal repräsentiert diejenige Einflussgröße auf die Geschwindigkeit des Fahrzeugs, die der dem Verfahren zugrunde liegende Mechanismus bereitstellt, um eine möglichst effiziente Geschwindigkeitsregelung durchzuführen. Bevorzugterweise ist das Stellsignal direkt proportional zu einer Verzögerung des Kraftfahrzeuges.

Das in Schritt 220 bestimmte Inklinationssignal wird dazu verwendet, die Bestimmung des Stellsignals aus dem Differenzsignal zu beeinflussen. Der Zeitpunkt der Bestimmung des Inklinationssignals liegt vorzugsweise möglichst nahe an dem Zeitpunkt, an dem das Stellsignal bestimmt wird, um Verfälschungen durch Verarbeitung nicht mehr aktueller Werte zu vermeiden. Aus diesem Grund wäre es auch möglich, Schritt 220 an einer beliebigen anderen als der dargestellten Stelle und insbesondere auch parallel zu anderen Schritten durchzuführen, solange sicher gestellt ist, dass der in Schritt 220 bestimmte Wert vorliegt, bevor er für die Durchführung des Schritts 250 benötigt wird.

Die Umwandlung des in Schritt 250 bestimmten Stellsignals in ein Bremssignal erfolgt in Schritt 260. Dabei kann eine Vielzahl weiterer Einflussfaktoren mitberücksichtigt werden. Beispielsweise kann ein Lenkwinkel oder eine eingelegte Getriebestufe in die Verarbeitung miteinbezogen werden. Ebenso können Informationen eines Antiblockiersystems oder das Drehmoment des Antriebstrangs in die Verarbeitung einfließen. Das Bremssignal kann radindividuelle Bremsinformationen für mehrere Radbremsen beinhalten. In diesem Fall kann Schritt 260 die radindividuelle Verteilung der Bremssignale auf die Bremsen beinhalten. In einem abschließenden Schritt 270 werden die derart bestimmten Bremssignale an eine Bremsanlage des Kraftfahrzeugs bereitgestellt.

Das dargestellte Ablaufdiagramm stellt eine Momentaufnahme eines zyklischen bzw. kontinuierlichen Prozesses dar. Diese Kontinuität und die Rückwirkung einer Bremsaktivierung auf eine später in Schritt 210 bestimmte Geschwindigkeit ist in diesem Ablaufdiagramm nicht enthalten, wird jedoch von dem Verfahren implizit umfasst.

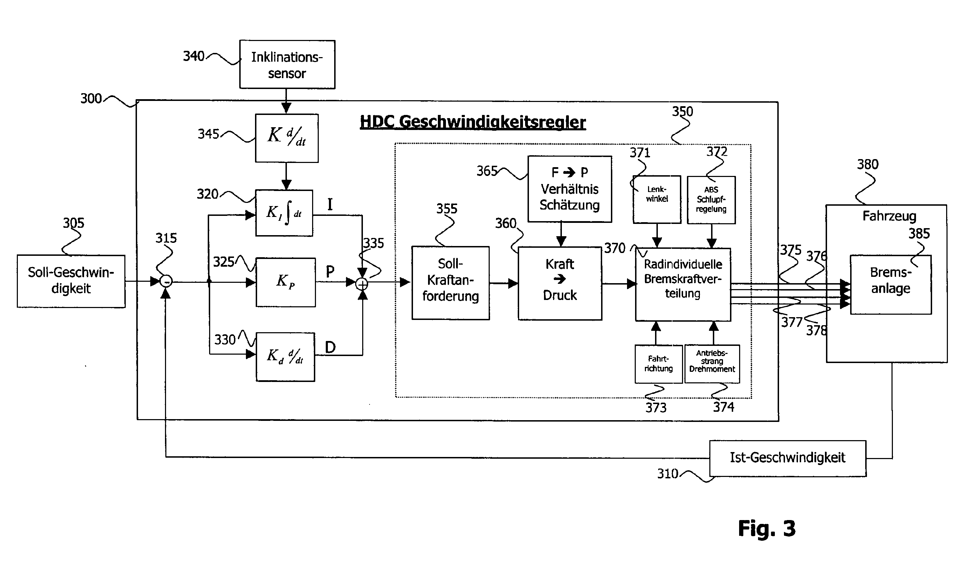

Fig. 3 zeigt ein weiteres Ausführungsbeispiel einer erfindungsgemäßen Vorrichtung zur Geschwindigkeitsregelung eines Kraftfahrzeugs. Die eigentlichen Regelungselemente (mit Ausnahme der Sensoren) befinden sich in dem mit dem Bezugszeichen 300 versehenen Kasten.

Ein Element 305 bestimmt eine Soll-Geschwindigkeit des Kraftfahrzeugs. Üblicherweise wird diese Geschwindigkeit vom Fahrer des Fahrzeugs vorgegeben; es ist jedoch auch möglich, eine automatische oder halbautomatische Übernahme eines von einer anderen Informationsquelle (z.B. einem Speicher) bereitgestellten Soll-Geschwindigkeitssignals an dieser Stelle durchzuführen.

In Element 310 wird die Ist-Geschwindigkeit des Fahrzeugs bestimmt. Im einfachsten Fall könnte es sich bei dieser Bestimmung um das Abgreifen eines bereitgestellten Tachosignals handeln; ein komplexeres System wird vorzugsweise ein präziseres Geschwindigkeitssignal, beispielsweise von einem ABS-Steuergerät, übernehmen. In Element 315 wird die Differenz der Ist-Geschwindigkeit des Fahrzeugs und seiner Soll-Geschwindigkeit bestimmt. Um diesen Schritt durchführen zu können, kann es erforderlich sein, die von den Elementen 305 und 310 gelieferten Geschwindigkeitsinformationen passend umzuwandeln oder zu normieren (nicht dargestellt). Eine Normierung kann die Kompensation eines Offsets-Fehlers oder die Multiplikation mit einem konstanten Faktor umfassen. Gegebenenfalls kann die Normierung auch für eine Angleichung des jeweiligen Zusammenhangs zwischen einer Signalgröße und einer Geschwindigkeit sorgen. Auf diese Weise werden die von den Komponenten 305 und 310 gelieferten Signale erforderlichenfalls vor ihrer Verarbeitung in Element 315 in das gleiche Format gebracht.

Drei Elemente 320, 325 und 330 repräsentieren die drei Zweige eines sogenannten PID-Reglers. Der integrative oder I-Zweig wird durch Element 320 repräsentiert, während Element 325 den proportionalen oder P-Zweig und Element 330 den differentiellen oder D-Zweig des Reglers darstellt. Prinzipiell kann ein beliebiger (oder können zwei beliebige) der drei Zweige weggelassen werden. Modelliert werden kann dies durch eine Multiplikation des Ausgangs des entsprechenden Zweiges mit dem konstanten Faktor 0. Ein konstanter Faktor wird ohnehin in jedem der drei Zweige verwendet, um die Eigenschaften des Reglers an die individuelle Problemstellung anzupassen. In jedem der Elemente 320, 325 und 330 ist ein solcher Faktor mit dem Buchstaben K gekennzeichnet. Die drei beschriebenen Zweige führen unterschiedliche, der Regelung dienende Komponentenbestimmungen durch, deren Ergebnisse in Element 335 addiert werden.

Prinzipiell kann der in Fig. 3 gezeigte PID-Regler auch durch eine andere Art Regler ersetzt werden, wie sie im Stand der Technik bekannt ist. Neben nichtlinearen Reglern kommen hierfür auch allgemein Abbildungstabellen oder auch statische lineare Rückführungen in Frage. Auch nicht stetige Regler sind verwendbar. Der Einfluss des Inklinationssignals auf den Regelvorgang muss dann an den Regler entsprechend angepasst werden. Das bevorzugte Ausführungsbeispiel gemäß Fig. 3 sieht jedoch einen PID-Regler vor und befasst sich im Folgenden eingehender mit einer Beeinflussung dessen I-Zweiges 320.

Ein Element 340 in Gestalt eines Inklinationssensors nimmt die Fahrzeugneigung auf. Passende Sensoren sind im Stand der Technik wohlbekannt und können beispielsweise durch Gyroskope oder Pendelsensoren implementiert sein. Die Position des Inklinationssensors 340 im Fahrzeug wird sinnvollerweise so gewählt, dass möglichst wenige Störeinflüsse wie Vibrationen oder Schaukelbewegungen das Messergebnis verfälschen. Ziel des Messvorgangs ist es, in möglichst guter Näherung die Inklination des sich zum Messzeitpunkt unter dem Fahrzeug befindenden Bodens zu bestimmen.

Ein dem Inklinationssensor 340 nachgeschaltetes Element 345 bestimmt eine Änderung des Inklinationssignals über die Zeit. Im dargestellten Ausführungsbeispiel erfolgt dies durch numerische Differenziation, nachdem das gemessene Inklinationssignal passend normiert und digitalisiert worden ist. Eine analoge oder mechanische Bestimmung der Änderung ist ebenfalls möglich. Erforderlichenfalls wird eine Anpassung der Ausgangsgröße durchgeführt, so dass eine Weiterverarbeitung stattfinden kann.

Das mittels des Elements 345 bestimmte Inklinationsänderungssignal beeinflusst den integrativen oder I-Zweig 320 des PID-Reglers. Da der I-Zweig eines PID-Reglers bei konstantem Eingangssignal ein stetig ansteigendes Ausgangssignal produziert, ist dieser Zweig des Reglers besonders geeignet, die Information einer Inklinationsänderung mit zu verarbeiten. Durch Einkoppelung des Inklinationsänderungssignals in den I-Zweig des PID-Reglers ist es möglich, einen sich ändernden Belastungszustand des Kraftfahrzeugs durch eine Änderung der Geländesteigung bereits in demselben Moment bei der Geschwindigkeitsregelung zu berücksichtigen, in dem die Änderung der Steigung stattfindet. Des Weiteren können radindividuelle Bremsdrücke bei Überkompensation vollständig durch den Regler ausgeregelt werden. Die Einkoppelung des von dem Element 345 bereitgestellten Signals kann beispielsweise additiv, multiplikativ, allgemein polynominal oder auch exponentiell erfolgen.

Die Elemente in dem mit dem Bezugszeichen 350 bezeichneten Kasten haben die Aufgabe, das von dem Element 335 bereitgestellte Stellsignal so zu verarbeiten, dass es für eine Einflussnahme auf eine Fahrzeugbremsanlage und damit auf die Ist-Geschwindigkeit 310 geeignet ist. Im dargestellten Ausführungsbeispiel bestimmt zunächst ein Element 355 aus dem eintreffenden Stellsignal eine Soll-Kraftanforderung, welche diejenige Kraft repräsentiert, die auf das Fahrzeug entgegen der Fahrtrichtung ausgeübt werden soll. Diese Bestimmung kann allgemein von jeder beliebigen Art sein, beispielsweise kann eine Umsetzungsfunktion implementiert sein oder auch eine Umsetzungstabelle. Ein Element 360 wandelt die bestimmte Kraft in einen Druck um, der von einer hydraulischen Bremsanlage verarbeitet werden kann. Diese Umwandlung erfolgt anhand einer Schätzung des Verhältnisses zwischen der von dem Element 355 angeforderten Kraft und dem zum Erreichen dieser Kraft erforderlichen hydraulischen Bremsdruck. Eine solche Abschätzung kann beispielsweise anhand einer Tabelle oder einer dynamischen Bestimmung des Verhältnisses aufgrund von in der Vergangenheit bestimmten Verhältnissen bestimmt werden.

Das von Element 360 bestimmte Drucksignal wird weitergeleitet an ein Element 370, welches eine radindividuelle Bremsdruck- bzw. Bremskraftverteilung durchführt. Im dargestellten Ausführungsbeispiel bedient sich die radindividuelle Bremskraftverteilung 370 der Einflussgrößen des Lenkwinkels 371, der ABS-Schlupfregelung 372, der Fahrtrichtung 373 und des Drehmoments im Antriebsstrang 374. Während es nicht erforderlich ist, alle vier Einflüsse 371 bis 374 in die radindividuelle Bremskraftverteilung 370 einfließen zu lassen, existieren noch weitere Fahrzeugkomponenten, deren bereitgestellte Informationen von der Einheit 370 mit verarbeitet werden können. Hierzu zählen beispielsweise Informationen über den Fahrzeuguntergrund, Verschleißinformationen einer Bremse, eine Einstellung einer gewünschten Fahrdynamik und weitere im Fahrzeug vorliegende Informationen.

Im dargestellten Ausführungsbeispiel produziert die radindividuelle Bremskraftverteilung 370 vier radindividuelle Bremssignale 375, 376, 377, 378 für jede Radbremse des Fahrzeugs 380. Für die Erzielung der Vorteile der erfindungsgemäßen Vorrichtung ist es generell jedoch ausreichend, ein einziges Bremssignal bereitzustellen.

Das Fahrzeug 380 verfügt über eine Bremsanlage 385, die vier von den Bremskraftsignalen 375 bis 378 angesteuerte radindividuelle Bremsen (nicht dargestellt) umfasst. Vorzugsweise handelt es sich um eine hydraulische Bremsanlage 385, wobei der Bremsdruck jeder der vier Radbremsen individuell elektrisch beeinflusst werden kann. Es ist jedoch auch möglich, das Verfahren an andere Bremstechnologien anzupassen. Arbeitet die Bremsanlage 385 beispielsweise rein elektrisch (brake-by-wire), so werden die Bremssignale 375 bis 378 ein entsprechendes Format aufweisen.

Das Fahrzeug 380, dessen Geschwindigkeit sich im Rahmen der Regelung ändern kann, übt einen Einfluss auf die Bestimmung der Ist-Geschwindigkeit durch Element 310 aus. Auf diese Weise ist der Regelkreis geschlossen und eine vollständige Regelung implementiert.

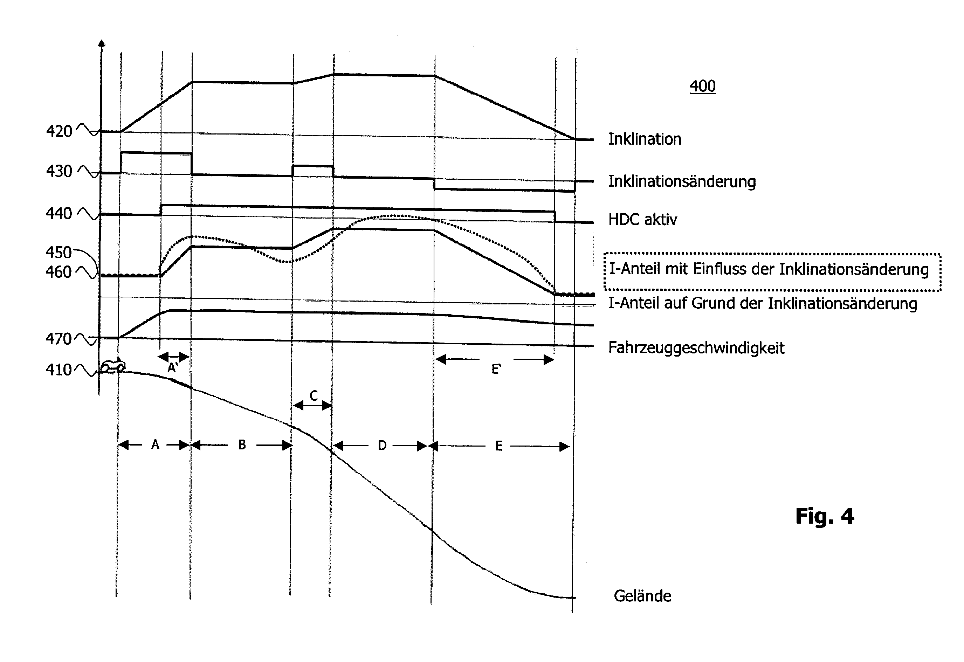

Die Graphen 400 in Fig. 4 stellen verschiedene Parameter dar, die bei Befahren einer Gefällestrecke durch ein erfindungsgemäß geschwindigkeitsgeregeltes Kraftfahrzeug auftreten.

Eine Kurve 410 zeigt eine Fahrstrecke mit Gefälle in einer Seitenansicht. In horizontaler Richtung ist das Gelände in fünf Abschnitt A bis E untereilt. Die gleichen Abschnitte werden im Folgenden zur Interpretation der Signale 420 bis 470, wie sie beispielsweise in der Vorrichtung 300 gemäß Fig. 3 auftreten, verwendet. Die horizontale Achse aller Kurven 410 bis 470 bezeichnet den in Kurve 410 dargestellten Ort.

Die Inklination des dargestellten Gefälles 410 ist in Kurve 420 (ausgedrückt z. B. in Prozent oder Grad Neigung) erkennbar. Während in Abschnitt A das Gefälle der Fahrstrecke zunimmt, bleibt es in Abschnitt B gleich. In Abschnitt C wird das Gefälle wieder linear zu, um in Abschnitt D konstant zu bleiben. In Abschnitt E nimmt das Gefälle linear ab, bis am Ende des Abschnitts E die Fahrstrecke horizontal (bzw. ihre Inklination 0) ist.

Eine dritte Kurve 430 zeigt die zeitliche Änderung der Inklination 420 an. Es ist erkennbar, dass die Änderung der Inklination in den Abschnitten A und C positiv ist, während sie in den Abschnitten B und D den Betrag 0 hat und in Abschnitt E negativ ist. Es ist auch zu erkennen, dass der Betrag der Änderung der Inklination in Abschnitt A größer ist als der in Abschnitt C. Abschnitt E hat betragsmäßig in etwa die gleiche Inklinationsänderung wie Abschnitt C.

Eine weitere Kurve 440 bezeichnet eine zeitweilige Aktivierung der erfindungsgemäßen HDC-Geschwindigkeitsregelung. Zu Demonstrationszwecken erfolgt die Aktivierung des Regelungssystems erst ungefähr in der Mitte des Abschnitts A und endet kurz vor Ende des Abschnitts E. Die Regelung ist also während der Abschnitte A', B, C, D und E' aktiv. Dies entspricht der typischen Aktivierung seitens eines Fahrers, der erst bei Befahren einer Gefällestrecke auf die HDC-Regelung zurückgreift und kurz vor Ende der Gefällestrecke das HDC-System wieder abschaltet.

Eine gepunktete Kurve 450 bezeichnet den I-Signalanteil eines erfindungsgemäßen, mit einem PID-Regelmechanismus ausgestatten HDC-Geschwindigkeitsreglers. In diesem Signal ist der Einfluss der Inklinationsänderung bereits enthalten. Die durchgezogene Kurve 460 bezeichnet denjenigen Teil des I-Anteils, der aufgrund der Inklinationsänderung Einfluss in die Regelung findet. Der Unterschied zwischen den Kurven 450 und 460 ist also der erfindungsgemäße Beitrag des Inklinationsänderungssignals auf die PID-Regelung. Es ist deutlich erkennbar, wie die durchgezogene Kurve 460 des I-Anteils aufgrund der Inklinationsänderung in ihrer Form der Kurve der Inklination 420 entspricht. Die Kompensation der Inklinationsänderung erfolgt also unmittelbar bei deren Auftreten, und nicht erst dadurch, dass sich eine durch die Änderung der Inklination bedingte Änderung der Fahrzeuggeschwindigkeit einstellt, die dann erst noch ausgeregelt werden muss.

Eine weitere Kurve 470 stellt die Fahrzeuggeschwindigkeit dar. Gut erkennbar ist, dass in den Bereichen A', B, C und D keine Veränderung der Fahrzeuggeschwindigkeit stattfindet. Der leichte Abfall der Fahrzeuggeschwindigkeit in Abschnitt E' liegt im tolerierbaren Bereich und zeugt von nur geringen Regelabweichungen. Bei Abschalten der HDC-Regelung am Ende des Abschnitts E' befindet sich das Fahrzeug auf (beinahe) horizontalem Untergrund, weshalb sich die Geschwindigkeit kaum noch weiter verändert.

Aus den beschriebenen Ausführungsformen wird dem Fachmann unmittelbar klar, dass die HDC-Geschwindigkeitsregelung gleichermaßen geeignet zur Regelung und insbesondere zur geregelten Konstanthaltung einer Fahrzeuggeschwindigkeit, in einem Gefälle ist.

Wie sich aus der Beschreibung der Ausführungsformen ergibt, wird die HDC-Geschwindigkeitsregelung verbessert, indem die Inklination bzw. die daraus ableitbare Hangabtriebskraft bzw. Hangabtriebsbeschleunigung als Störgröße auf einen Regelkreis betrachtet wird. Durch diese Maßnahme kann der störende Einfluss auf die Regelung minimiert oder gar beseitigt werden. Im Ergebnis kann der Regelkreis somit als eine Regelung für eine ebene Strecke betrachtet werden, wobei die erfindungsgemäße Störgrößenaufschaltung ein adaptives Mitführen des Reglers bei sich verändernder Hangabtriebskraft bzw. Hangabtriebsbeschleunigung bewirkt. Diese Größen sowie ihr zeitliches Verhalten lassen sich mittels eines Modells aus dem Inklinationssignal ermitteln.

Insgesamt vermeidet die in den Ausführungsformen dargelegte Störgrößenaufschaltung ein zu langsames Nachregelverhalten des Reglers und verbessert das Übergangsverhalten bei einem Gradientenwechsel (Gefälle-/Steigungsänderung). Als vorteilhaften Nebeneffekt erhält man ein vereinfachtes Reglerkonzept mit einem vereinfachten Regelalgorithmus. Ferner besteht eine Möglichkeit zur radindividuellen Bremskraftverteilung aufgrund weiterer Einflussgrößen. Zu diesen weiteren Einflussgrößen zählen Überlagerungssignale eines ABS-Schlupfreglers, eine lenkwinkelabhängige Bremskraftaufteilung, eine fahrtrichtungsabhängige Bremskraftaufteilung sowie eine Bremskraftaufteilung aufgrund eines Powertrain-Moments bzw. -Schubmoments.

## Patentansprüche

1. Verfahren zur Regelung einer Ist-Geschwindigkeit eines Kraftfahrzeugs in dessen Fahrtrichtung bei Befahren einer Gefällestrecke, folgende Schritte umfassend:
• Bestimmen (210) eines Ist-Geschwindigkeitssignals;
• Bestimmen (220) eines Inklinationssignals;
• Bestimmen (230) eines Soll-Geschwindigkeitssignals;
• Bestimmen(240) eines Differenzsignals aus dem Ist-Geschwindigkeitssignal und dem Soll-Geschwindigkeitssignal;
• Bestimmen (250) eines Stellsignals aus dem Differenzsignal unter Beeinflussung durch das Inklinationssignal;
• Umwandeln (260) des Stellsignals in wenigstens ein Bremssignal; und
• Bereitstellen (270) des wenigstens einen Bremssignals an eine Bremsanlage des Kraftfahrzeugs,
**dadurch gekennzeichnet, dass**
das Inklinationssignal eine zeitliche Inklinationsänderung angibt.

2. Verfahren nach Anspruch 1, **dadurch gekennzeichnet, dass** das Bestimmen (250) des Stellsignals aus dem Differenzsignal eine Proportional-Integral-Differential (PID)-Regelung umfasst.

3. Verfahren nach Anspruch 2, **dadurch gekennzeichnet, dass** der integrative Zweig der PID-Regelung durch das Inklinationssignal beeinflusst wird.

4. Verfahren nach einem der vorangegangenen Ansprüche, **dadurch gekennzeichnet, dass** die Umwandlung (260) des Stellsignals in wenigstens ein Bremssignal eine Umwandlung einer aus dem Stellsignal abgeleiteten Soll-Bremskraft in einen der Soll-Bremskraft zugeordneten Bremsdruck umfasst.

5. Verfahren nach einem der vorangegangenen Ansprüche, **dadurch gekennzeichnet, dass** das Kraftfahrzeug über mehrere Radbremsen verfügt und dass das Stellsignal in wenigstens ein radindividuelles Bremssignal umgewandelt wird.

6. Verfahren nach Anspruch 5, **dadurch gekennzeichnet, dass** die Umwandlung des Stellsignals (260) in wenigstens ein Bremssignal weitere Einflüsse, die den Zusammenhang zwischen der Soll-Bremskraft und einer Verzögerung des Kraftfahrzeugs beeinflussen, berücksichtigt.

7. Verfahren nach Anspruch 5 oder 6, **dadurch gekennzeichnet, dass** die radindividuelle Bremssignalverteilung Funktionen eines Antiblockiersystems (ABS) und/oder eines Elektronischen Stabilitätsprogramms (ESP) berücksichtigt.

8. Computerprogrammprodukt mit Programmcodemitteln zur Durchführung eines Verfahrens nach einem der vorangegangenen Ansprüche, wenn das Computerprogrammprodukt auf einer Verarbeitungseinheit läuft.

9. Computerprogrammprodukt nach Anspruch 8, gespeichert auf einem für die Verarbeitungseinheit lesbaren Medium.

10. Vorrichtung (100; 300) zur Regelung einer Ist-Geschwindigkeit eines Kraftfahrzeugs (380) in dessen Fahrtrichtung bei Befahren einer Gefällestrecke, umfassend:
• eine Einrichtung (170; 310) zur Bestimmung eines Ist-Geschwindigkeitssignals;
• eine Einrichtung (150; 340) zur Bestimmung eines Inklinationssignals;
• eine Einrichtung (120; 305) zur Bestimmung eines Soll-Geschwindigkeitssignals;
• eine Einrichtung (130; 315) zur Bestimmung eines Differenzsignals aus dem Ist-Geschwindigkeitssignal und dem Soll-Geschwindigkeitssignal;
• eine Einrichtung (140; 320, 325, 330, 335) zur Bestimmung eines Stellsignals aus dem Differenzsignal, die mit der Einrichtung (150; 340) zur Bestimmung des Inklinationssignals derart gekoppelt ist, dass das Bestimmen des Stellsignals aus dem Differenzsignal durch das Inklinationssignal beeinflussbar ist; und
• eine Einrichtung (160; 350) zur Bestimmung wenigstens eines Brems-signals aus dem Stellsignal,
**dadurch gekennzeichnet, dass**
das Inklinationssignal eine zeitliche Inklinationsänderung angibt.

11. System zum Abbremsen eines mehrere Räder umfassenden Kraftfahrzeugs (380), insbesondere bei Befahren einer Gefällestrecke, umfassend
• eine mit dem Kraftfahrzeug (380) koppelbare und auf wenigstens eines seiner Räder wirkende Bremsanlage (385); und
• eine Vorrichtung (100; 300) zur Regelung der Bremsanlage nach Anspruch 10.

## Claims

1. A method of controlling an actual speed of a motor vehicle in travelling direction thereof during a hill descent, comprising the following steps:
• determining (210) an actual speed signal;
• determining (220) an inclination signal;
• determining (230) a setpoint speed signal;
• determining (240) a difference signal from the actual speed signal and the setpoint speed signal;
• determining (250) an actuating signal from the difference signal with simultaneous influencing by the inclination signal;
• converting (260) the actuating signal to at least one braking signal; and
• supplying (270) the at least one braking signal to a brake system of the motor vehicle,
**characterized in that**
the inclination signal indicates a time rate of change of the inclination.

2. The method according to claim 1, **characterized in that** the determination (250) of the actuating signal from the difference signal comprises a proportional-integral-differential (PID) control operation.

3. The method according to claim 2, **characterized in that** the integrative branch of the PID controller is influenced by the inclination signal.

4. The method according to one of the preceding claims, **characterized in that** the conversion (260) of the actuating signal to at least one braking signal comprises a conversion of a setpoint braking force derived from the actuating signal to a brake pressure associated with the setpoint braking force.

5. The method according to one of the preceding claims, **characterized in that** the motor vehicle has a plurality of wheel brakes and that the actuating signal is converted to at least one wheel-specific braking signal.

6. The method according to claim 5, **characterized in that** the conversion of the actuating signal (260) to at least one braking signal takes into account further influences that influence the relationship between the setpoint braking force and a deceleration of the motor vehicle.

7. The method according to claim 5 or 6, **characterized in that** the wheel-specific braking signal distribution takes into account functions of an antilock braking system (ABS) and/or of an electronic stability program (ESP).

8. A computer program product with program code means for implementing a method according to one of the preceding claims when the computer program product is in operation at a processing module.

9. The computer program product according to claim 8, stored on a medium that is readable by the processing module.

10. An apparatus (100; 300) for controlling an actual speed of a motor vehicle (380) in travelling direction thereof during a hill descent, comprising:
• a device (170; 310) for determining an actual speed signal;
• a device (150; 340) for determining an inclination signal;
• a device (120; 305) for determining a setpoint speed signal;
• a device (130; 315) for determining a difference signal from the actual speed signal and the setpoint speed signal;
• a device (140; 320, 325, 330, 335) for determining an actuating signal from the difference signal, which device is coupled in such a way to the device (150; 340) for determining the inclination signal that the determination of the actuating signal from the difference signal may be influenced by the inclination signal; and
• a device (160; 350) for determining at least one braking signal from the actuating signal,
**characterized in that**
the inclination signal indicates a time rate of change of the inclination.

11. A system for braking a motor vehicle (380) comprising a plurality of wheels, in particular during a hill descent, comprising
• a brake system (385) that can be coupled to the motor vehicle (380) and acts upon at least one of the wheels thereof; and
• an apparatus (100; 300) for controlling the brake system according to claim 10.

## Revendications

1. Procédé de régulation d'une vitesse réelle d'un véhicule automobile dans sa direction de marche en cas de conduite dans une pente, comprenant les étapes suivantes :
• détermination (210) d'un signal de vitesse réelle ;
• détermination (220) d'un signal d'inclinaison ;
• détermination (230) d'un signal de vitesse de consigne ;
• détermination (240) d'un signal de différence à partir du signal de vitesse réelle et du signal de vitesse de consigne ;
• détermination (250) d'un signal de commande à partir du signal de différence sous l'influence du signal d'inclinaison ;
• conversion (260) du signal de commande en au moins un signal de freinage ; et
• mise à disposition (270) dudit au moins un signal de freinage à un système de freinage du véhicule automobile,
**caractérisé en ce que**
le signal d'inclinaison indique une variation d'inclinaison dans le temps.

2. Procédé selon la revendication 1, **caractérisé en ce que** la détermination (250) du signal de commande à partir du signal de différence comprend une régulation proportionnelle, intégrale et dérivée (PID).

3. Procédé selon la revendication 2, **caractérisé en ce que** la branche intégrative de la régulation PID est influencée par le signal d'inclinaison.

4. Procédé selon l'une des revendications précédentes, **caractérisé en ce que** la conversion (260) du signal de commande en au moins un signal de freinage comprend une conversion d'une force de freinage de consigne dérivée du signal de commande en une pression de freinage associée à la force de freinage de consigne.

5. Procédé selon l'une des revendications précédentes, **caractérisé en ce que** le véhicule automobile dispose de plusieurs freins de roue, et **en ce que** le signal de commande est convertit en au moins un signal de freinage individuel par roue.

6. Procédé selon la revendication 5, **caractérisé en ce que** la conversion du signal de commande (260) en au moins un signal de freinage tient compte d'autres facteurs qui ont une influence sur le rapport entre la force de freinage de consigne et une décélération du véhicule automobile.

7. Procédé selon la revendication 5 ou 6, **caractérisé en ce que** la répartition individuelle par roue du signal de freinage tient compte des fonctions d'un système de freinage antiblocage (ABS) et/ou d'un programme de stabilité électronique (ESP).

8. Produit-programme informatique avec des moyens de codage de programme pour mettre en oeuvre un procédé selon l'une des revendications précédentes lorsque le produit-programme informatique s'exécute sur une unité de traitement.

9. Produit-programme informatique selon la revendication 8, enregistré sur un support lisible par l'unité de traitement.

10. Dispositif (100 ; 300) de régulation d'une vitesse réelle d'un véhicule automobile (380) dans sa direction de marche en cas de conduite dans une pente, comprenant :
• un moyen (170 ; 310) de détermination d'un signal de vitesse réelle ;
• un moyen (150 ; 340) de détermination d'un signal d'inclinaison ;
• un moyen (120 ; 305) de détermination d'un signal de vitesse de consigne ;
• un moyen (130 ; 315) de détermination d'un signal de différence à partir du signal de vitesse réelle et du signal de vitesse de consigne ;
• un moyen (140 ; 320, 325, 330, 335) de détermination d'un signal de commande à partir du signal de différence, qui est couplé au moyen (150 ; 340) de détermination du signal d'inclinaison de telle façon que la détermination du signal de commande à partir du signal de différence puisse être influencée par le signal d'inclinaison ; et
• un moyen (160 ; 350) de détermination d'au moins un signal de freinage à partir du signal de commande,
**caractérisé en ce que**
le signal d'inclinaison indique une variation d'inclinaison dans le temps.

11. Système pour freiner un véhicule automobile (380) comprenant plusieurs roues, en particulier en cas de conduite dans une pente, comprenant
• un système de freinage (385) apte à être couplé au véhicule automobile (380) et agissant sur au moins une de ses roues ; et
• un dispositif (100 ; 300) de régulation du système de freinage selon la revendication 10.
